# EUROPEAN PATENT SPECIFICATION

(11) **EP 4 102 432 B1**
(45) Date of publication and mention of the grant of the patent: **02.04.2025**
(21) Application number: 22161330.0
(22) Date of filing: 10.03.2022
(51) Int. Cl.: G06Q 20/20, G06Q 10/08, G07G 1/00

(54) **SALES DATA PROCESSING DEVICE, SECURITY DEVICE, AND PROGRAM**
VERKAUFSDATENVERARBEITUNGSVORRICHTUNG, SICHERHEITSVORRICHTUNG UND PROGRAMM
DISPOSITIF DE TRAITEMENT DE DONNÉES DE VENTE, DISPOSITIF DE SÉCURITÉ ET PROGRAMME

(30) Priority: 07.06.2021 JP 2021095148
(43) Date of publication of application: 14.12.2022
(73) Proprietor: Toshiba TEC Kabushiki Kaisha, Tokyo 141-8562 (JP)
(72) Inventor: Suzuki, Shigeaki, Tokyo, 141-8562 (JP)
(74) Representative: Hoffmann Eitle

(56) References cited:
- US-A1- 2013 093 591
- US-A1- 2017 046 707
- US-A1- 2021 090 058

## Description

### CROSS-REFERENCE TO RELATED APPLICATION

This application is based upon and claims the benefit of priority from Japanese Patent Application No. 2021-095148, filed June 7, 2021.

### FIELD

Embodiments described herein relate generally to a sales data processing device, a security device, and a program.

### BACKGROUND

Sales data processing using a wireless tag, such as a radio-frequency identification (RFID) tag, has been performed. For such processing, wireless tags are attached to items being sold at a store, such as a retail store or a supermarket. A sales data processing device for such purposes includes a reader device that reads information from the wireless tags on the items being purchased by a customer. There is, however, an occasion where the reader device reads information of an unintended wireless tag, that is a wireless tag attached to an item that is not intended to be purchased by the customer. This generally occurs when a wireless tag other than a wireless tag attached to an item being purchased is present within a readable range of the reader device.

For example, a customer may bring a still-tagged, previously purchased item from home or from another store. When the customer begins registering items at a self-service checkout terminal of the present store, if the still-tagged item from another store is an affiliated store of the present store (e.g., same store chain), the reader device may sometimes read information from a wireless tag attached to the already purchased from the affiliated store. This can lead to an awkward and confusing situation for the customer and the present store when additional items beyond those intended by the customer show up in the present sales transaction.

Additionally, in some stores, a gate device is provided to detect items being removed from the store without checkout/purchase. Such a gate device may emit an audible alarm when such items are detected as leaving the store. And as in the case of commodity registration processing, previously purchased items (from affiliated stores or otherwise) may inadvertently trigger an alarm. Inadvertent or improper detection of such a situation is inconvenient and also potentially awkward. Hence, there is a need for a sales data processing device and a program that can prevent erroneous detection and registration of items at checkout and/or upon leaving of a store. Relevant prior art can be found in the patent publications US 2017/046707 A1, US 2013/093591 A1 and US 2021/090058 A1.

### SUMMARY OF THE INVENTION

One of the objects of the present invention is to improve prior art techniques and overcome at least some of the prior art problems as for instance above illustrated.

According to a first aspect of the present invention, it is provided a point-of-sales data processing device, comprising a controller configured to acquire article identification information read by a tag reader from a wireless tag of an article; interrogate a first server for information regarding the acquired article identification information, the first server storing information concerning individual articles handled at a first store at which the point-of-sales data processing device is located and a second store; determine, based on the information returned from the first server as a result of the interrogation, whether the article corresponding to the article identification information read from the wireless tag by the tag reader is listed as being is in stock at the first store; register the article identification information in a sales transaction if the article is listed as being in stock at the first store; and update the information in the first server for the article to indicate that the article is no longer in stock at the first store if the article identification information for the article is registered in the sales transaction.

The controller of the point-of-sales data processing device is further configured to determine, based on the information returned from the first server as a result of the interrogation, whether the article corresponding to the article identification information read from the wireless tag by the tag reader is listed as being in stock at the second store.

The processor of the point-of-sales data processing device is further configured to generate alert information if the article is listed as being in stock at the second store.

Optionally, in the point-of-sales data processing device according to the first aspect of the present invention, the controller is further configured to interrogate a second server before the first server regarding the article identification information read from the wireless tag to determine whether the article is a commodity type sold at the first store.

Optionally, in the point-of-sales data processing device according to the first aspect of the present invention, the wireless tag is an RFID tag.

Optionally, the point-of-sales data processing device according to the first aspect of the present invention further comprises the tag reader.

Optionally, in the point-of-sales data processing device according to the first aspect of the present invention, the information concerning individual articles includes a flag data associated therewith indicating whether the article has been previously purchased.

According to a second aspect of the present invention, it is provided a security device, comprising a controller configured to acquire article identification information read by a tag reader from a wireless tag of an article; interrogate a first server for information regarding the acquired article identification information, the first server storing information concerning individual articles handled at a first store at which the point-of-sales data processing device is located and a second store; determine, based on the information returned from the first server as a result of the interrogation, whether the article corresponding to the article identification information read from the wireless tag by the tag reader is listed as being is in stock at the first store; and generate alert information if the article is listed as being in stock at the first store.

The controller of the security device further configured to determine, based on the information returned from the first server as a result of the interrogation, whether the article corresponding to the article identification information read from the wireless tag by the tag reader is listed as being in stock at the second store.

The controller is further configured to generate alert information if the article is listed as being in stock at the second store.

Optionally, in the security device according to the second aspect of the present invention, the wireless tag is an RFID tag.

Optionally, in the security device according to the second aspect of the present invention, the commodity information and the commodity identification information are stored in correlation with each other.

Optionally, the security device according to the second aspect of the present invention further comprises the tag reader, wherein the tag reader is a gate tag reader configured to be positioned near an exit of the first store.

According to a third aspect of the present invention, it is provided a non-transitory computer-readable medium storing a program which, when executed, causes a point-of-sales device to perform a sales data processing method comprising acquiring article identification information read by a tag reader from a wireless tag of an article; interrogating a first server for information regarding the acquired article identification information, the first server storing information concerning individual articles handled at a first store at which the point-of-sales device is located and a second store; determining, based on the information returned from the first server as a result of the interrogation, whether the article corresponding to the article identification information read from the wireless tag by the tag reader is listed as being is in stock at the first store; registering the article identification information in a sales transaction if the article is listed as being in stock at the first store; and updating the information in the first server for the article to indicate that the article is no longer in stock at the first store if the article identification information for the article is registered in the sales transaction.

The method in the non-transitory computer-readable medium further comprises determining, based on the information returned from the first server as a result of the interrogation, whether the article corresponding to the article identification information read from the wireless tag by the tag reader is listed as being in stock at the second store.

The method in the non-transitory computer-readable medium further comprises generating alert information if the article is listed as being in stock at the second store.

Optionally, in the non-transitory computer-readable medium according to the third aspect of the invention, the method further comprises interrogating a second server before the first server regarding the article identification information read from the wireless tag to determine whether the article is a commodity type sold at the first store.

Optionally, in the non-transitory computer-readable medium according to the third aspect of the invention, the wireless tag is an RFID tag.

Optionally, in the non-transitory computer-readable medium according to the third aspect of the invention, the information concerning individual articles includes a flag data associated therewith indicating whether the article has been previously purchased.

Optionally, in the non-transitory computer-readable medium according to the third aspect of the invention, the method further comprises performing checkout processing for the sales transaction based on the registered article identification information.

### BRIEF DESCRIPTION OF THE DRAWINGS

FIG. 1 is a diagram illustrating an example of a configuration of a stock management system according to an embodiment.
FIG. 2 is a diagram illustrating an example of a configuration of a POS terminal device according to an embodiment.
FIG. 3 is a diagram illustrating an example of a configuration of a control unit of a POS terminal device according to an embodiment.
FIG. 4 is a diagram illustrating an example of information stored in a store stock unit of a store server according to an embodiment.
FIG. 5 is a diagram illustrating an example of information stored in a price-information storing unit of a store server according to an embodiment.
FIG. 6 is a diagram illustrating an example of information stored in a stock-information storing unit of a headquarters server according to an embodiment.
FIG. 7 is a flowchart of sales data processing to be executed by a control unit according to an embodiment.
FIG. 8 is a flowchart of stock management processing to be executed by a headquarters server and a store server according to an embodiment.
FIG. 9 is a diagram of a configuration of a gate RFID reader according to an embodiment.
FIG. 10 is a diagram of a control unit of a gate RFID reader according to an embodiment.
FIG. 11 is a flowchart of security processing executed by a gate RFID reader according to an embodiment.

### DETAILED DESCRIPTION

According to one embodiment, a point-of-sales data processing device includes a controller configured to acquire article identification information read by a tag reader from a wireless tag of an article and interrogate a first server for information regarding the acquired article identification information. The first server stores information concerning individual articles handled at a first store at which the point-of-sales data processing device is located and a second store. The controller is configured to determine, based on the information returned from the first server as a result of the interrogation, whether the article corresponding to the article identification information read from the wireless tag by the tag reader is listed as being is in stock at the first store. If the article is listed as being in stock at the first store, the controller is configured to register the article identification information in a sales transaction. The controller then updates the information in the first server for the article to indicate that the article is no longer in stock at the first store once the article identification information for the article has been registered in the sales transaction.

According to one or more embodiments, a sales data processing device includes a tag reader and a controller. The controller acquires commodity identification information stored in a commodity wireless tag read by the tag reader, inquire of a first server about a commodity identified by the acquired commodity identification information, determine, based on a result of the inquiry, whether the identified commodity is in stock at the first store, register the commodity information of the identified commodity as sales data if the identified commodity is in stock at the first store, and after the register of the sales data, request the first server to update the stored commodity information based on the registered sales data to indicate that the identified commodity is no longer in stock at the first store. The first server stores both commodity information concerning commodities handled at a first store and a second store and the commodity identification information.

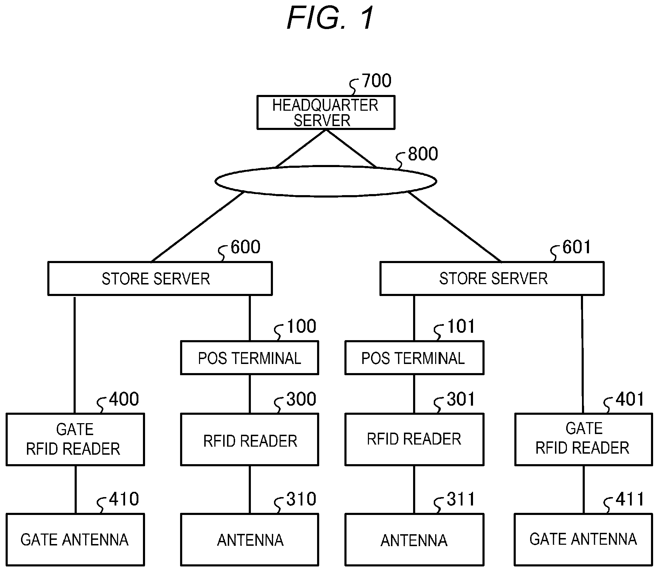

Some example embodiments of a stock management system including a sales data processing device and a security device will be explained with reference to the accompanying drawings. As illustrated in FIG. 1, the stock management system according to an embodiment includes Point Of Sales (POS) terminals 100 and 101, RFID readers 300 and 301, antennas 310 and 311, gate RFID readers 400 and 401, gate antennas 410 and 411, store servers 600 and 601, and a headquarters server 700.

In this description, an RFID tag is an example of a commodity wireless tag or a wireless tag attached to a commodity (such as an article, an item, a product, etc.) that can be purchased at a retail store or the like. The RFID readers 300 and 301 are an example of a reader device that reads information stored in the wireless tag.

In FIG. 1, certain depicted devices o are illustrated as several component deceives However, in some implementations, these devices may be provided as an integrated single device. Likewise, while FIG. 1 depicts two store servers 600 and 601, in general, any number of store servers may be incorporated. The same goes for POS terminals, RFID readers, antennas, gate RFID readers, and gate antennas. In the following explanation, devices illustrated in FIG. 1 will be explained but typically only one representative example will be described. Unless stated otherwise, aspects sharing a common name can be considered to correspond to the representative example. For example, only the POS terminal 100 is particularly explained. However, the POS terminal 101 can be considered to be substantially the same as POS terminal 100.

The RFID reader 300 is connected to the POS terminal 100 and operates according to control by the POS terminal 100. The antenna 310 is connected to the RFID reader 300 and transmits and receives radio waves according to control by the RFID reader 300. The RFID reader 300 communicates with an RFID tag through transmission and reception of the radio waves by the antenna 310 and acquires information stored in the RFID tag. The RFID tag stores individual identification information (e.g., unique identification information) for the commodity to which the RFID tag is attached. The RFID tag may further include, incorporate, or provide class or type information for the associated commodity such as a product code, stock-keeping unit (SKU), or the like to which the individually tagged item belongs. The RFID reader 300 transmits the information acquired from the RFID tag to the POS terminal 100. The acquired information about the commodity may be referred to as commodity identification information or article identification information.

The POS terminal 100 is an example of a sales data processing device that performs sales data processing in this embodiment and performs registration processing of information concerning a commodity or item being purchased in a sales transaction and then performs checkout processing for the registered commodities/items. The registration processing and the checkout processing are part of the sales data processing.

The POS terminal 100 is connected to the RFID reader 300 and acquires the information received from the RFID tag through the RFID reader 300. The POS terminal 100 is connected to the store server 600 and transmits and receives information to and from the store server 600 as appropriate.

The store server 600 is connected to the headquarters server 700 via a network 800 and transmits and receives information to and from the headquarters server 700 as appropriate.

The store server 600 is also connected to the POS terminal 100 by a network (which may be either wired or wireless), such as a Local Area Network (LAN), and performs transmission and reception of information to and from the POS terminal 100. For example, the store server 600 stores information concerning commodities stocked and sold at a store and provides the information to the POS terminal 100. The store server 600 acquires sales data from the POS terminal 100.

Further, the store server 600 receives, from the headquarters server 700, information concerning commodities stocked at all related stores (including group stores, affiliated stores, associated stores, or the like) that belong to the same group or, for example, that are under control of a single parent company.

The headquarters server 700 is connected to the store server 600 via the network 800 and performs transmission and reception of information to and from the store server 600. For example, the headquarters server 700 provides both the commodity identification information and the commodity information, such as a price and a name of a commodity, to the store server 600. The headquarters server 700 acquires the sales data and the like from the store server 600.

The store server 600 is also connected to the gate RFID reader 400 by a network, such as a LAN, and performs transmission and reception of information to and from the gate RFID reader 400.

The gate antenna 410 is connected to the gate RFID reader 400 and transmits and receives radio waves according to control by the gate RFID reader 400. The gate RFID reader 400 communicates with the RFID tag through transmission and reception of the radio waves by the gate antenna 410 and acquires the information stored in the RFID tag.

The gate RFID reader 400 transmits the information acquired from the RFID tag via the gate antenna 410 to the store server 600 via the network.

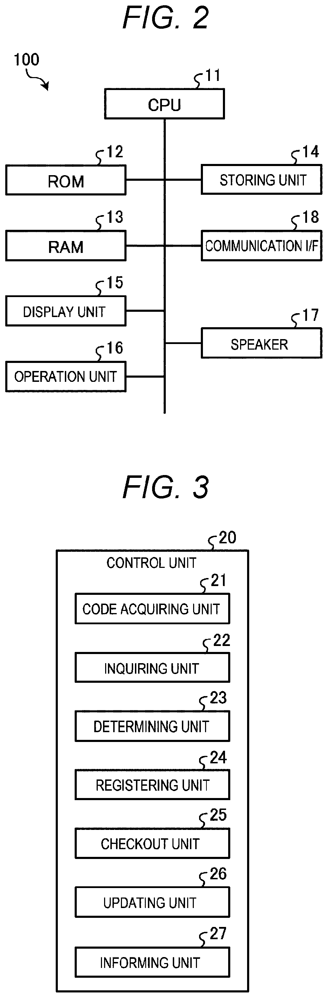

As illustrated in FIG. 2, the POS terminal 100 includes a central processing unit (CPU) 11, a read only memory (ROM) 12, a random-access memory (RAM) 13, a storing unit 14, a display unit 15, an operation unit 16, a speaker 17, and a communication interface (I/F) 18.

The display unit 15 includes a display device, such as a liquid crystal panel, and displays information to a user, an operator, or the like. The operation unit 16 includes as user operation device, such as a touch panel superimposed on the display unit 15. The operation unit 16 may include a keyboard or a mouse that receives input operations from a user or may include a unit or a device that receives operation according to oral commands from a user (speech commands) received by a sound collection device, such as a microphone.

The speaker 17 emits sound according to control by the CPU 11. The sound may be a speech, recorded messages, or tones/beeps.

The communication I/F 18 is an example of a communication unit that enables communication with an external device, such as the store server 600, the RFID reader 300, and the like.

The storing unit 14 stores programs and various files and data. The storing unit 14 includes a storage device, such as a hard disk drive (HDD) and a solid-state drive (SSD). Part or all of the programs stored in the storing unit 14 is or are executed by the CPU 11, for example, upon activation and/or during operation of the POS terminal 100.

The ROM 12 stores the programs to be executed by the CPU 11. The RAM 13 is used for loading the programs to be executed by the CPU 11 and for temporarily storing various values and data. The CPU 11 executes the programs stored in the ROM 12 and the storing unit 14 to function as a control unit 20.

FIG. 3 is a diagram illustrating an example of a functional configuration of the control unit 20 of the POS terminal 100. The control unit 20 is realized by the CPU 11 executing one or more programs. The control unit 20 so configured includes various functional units and/or provides various functions. For example, the control unit 20 provides functions of a code acquiring unit 21 (acquiring unit 21), an inquiring unit 22, a determining unit 23, a registering unit 24, a checkout unit 25, an updating unit 26, and an informing unit 27.

The code acquiring unit 21 receives information transmitted from the RFID reader 300 and thus acquires individual article identification information (e.g., an individual article code) from an individually tagged commodity (that is, an individual commodity, item, article, or product unit). Such information is stored in the RFID tag affixed to the individual commodity/item.

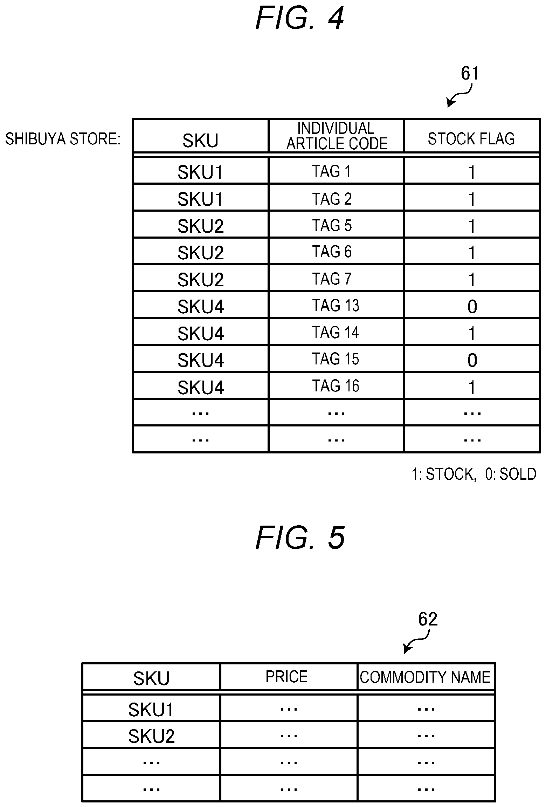

The inquiring unit 22 interrogates store stock unit 61 (see FIG. 4) regarding the acquired individual article code. The store server 600 in this example includes the store stock unit 61. The store stock unit 61 stores information about each of the items/articles handled or sold by the store correlated with the individual identification information for the individual article unit.

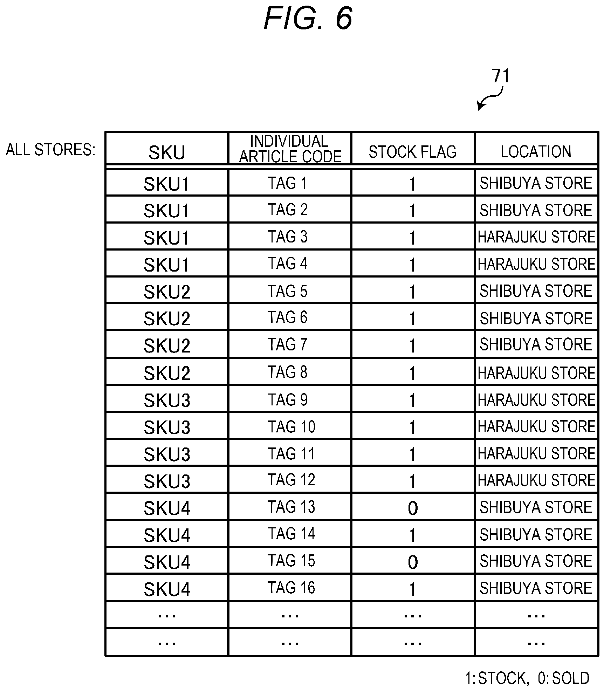

If the acquired individual article code is absent from the store stock unit 61, the inquiring unit 22 next interrogates a stock-information storing unit 71 (see FIG. 6) about the individual article code. The headquarters server 700 includes the stock-information storing unit 71 in this example. The stock-information storing unit 71 stores information about the commodities handled at all the related stores managed by the same headquarters server 700. In general, such related stores will belong to the same chain or be under control of a single parent company, but such is not necessarily required, and the related stores may be merely grouped together for purposes of the presently described system or affiliated with each other in an informal manner. The headquarters server 700 stores the identification information including the individual article codes for items for sale at the various stores.

The determining unit 23 determines, based on the inquiry results obtained by the inquiring unit 22, whether an article identified by the individual article code acquired by the code acquiring unit 21 is a commodity stocked at the present store or a commodity stocked at an affiliated store.

If the determining unit 23 determines that the identified commodity is a commodity stocked in the store, the registering unit 24 registers the information for the identified commodity as sales data (the corresponding item is registered in the sales transaction for purchase). The checkout unit 25 performs checkout processing based on the sales data.

After the registering unit 24 registers the sales data, the updating unit 26 causes the information of the store stock unit 61 and the stock-information storing unit 71 to updated stored information for the now-registered item associated with the individual article code to indicate that the article is no longer in stock. That is, the corresponding item has been purchased.

In the stock management system configuration of the present embodiment, since the POS terminal 100 and the headquarters server 700 are not configured to directly communicate with each other, a request from the updating unit 26 to the headquarters server 700 to update the information in the stock-information storing unit 71 is communicated to the headquarters server 700 from the store server 600.

If the determining unit 23 determines that the item corresponding to the individual article code acquired by the code acquiring unit 21 is in stock at an affiliated store, the informing unit 27 generates alert information. The alert information can be used at the POS terminal 100 and also communicated to the store server 600 and the headquarters server 700 via the communication I/F 18 of the POS terminal 100. Based on the alert information, the POS terminal 100, the store server 600, and the headquarters server 700 performs, for example, displaying an alert message, flashing an alert light, making an alert sound, or the like.

FIG. 4 is a diagram illustrating an example of information stored in the store stock unit 61 included in the store server 600. FIG. 5 is a diagram illustrating an example of information stored by the price-information storing unit 62 included in the store server 600. The store server 600 has, for example, a configuration like a general personal computer (PC) and includes at least a CPU and a storage device. The storage device (s) may include a ROM, a RAM, and/or an HDD. One or more partial regions of the storage device can be used for the store stock unit 61 and the price-information storing unit 62.

The price-information storing unit 62 stores a so-called commodity master file or price lookup (PLU) table that correlates the commodity information, such as a price and a name of each commodity, with the commodity identification information. The commodity price and name identify each commodity in a stock-keeping unit (SKU), for example. Therefore, the identification information stored in the price-information storing unit 62 is an SKU code. The SKU code is, for example, a Japanese Article Number (JAN) code.

The store stock unit 61 may store both the information concerning articles handled at the store and the identification information for each individual item/article. The identification information in this context includes an individual article code stored in an RFID tag specifically attached to a particular item. The store stock unit 61 stores an SKU code (e.g., a product classification code), the individual article code, and a stock flag in correlation with one another. As the stock flag in this example, a value of "1" indicates "in stock" or "presently stocked" (that is, the particular item identified by the individual article code is still in stock at the first store) and "0" indicates "sold" (that is, the item has already been sold from the store). In some instances, the stock flag "0" may be used to indicate that the item is no longer present at the store because it has been removed for reasons other than customer sale. For example, the item may be absent because of movement to another store, stock rotation, or the like. In the present embodiment, the store server 600 (or the store server 601) of the second store has the same or the substantially the same configuration as that of the first store and stores the commodity information and the commodity identification information of commodities being handled at the second store.

The headquarters server 700 has, for example, a configuration like a general PC and includes at least a CPU and a storage device. The storage device may include a ROM, a RAM, and/or an HDD. One or more partial regions, if not all, of the storage device are used as the stock-information storing unit 71 illustrated as one example in FIG. 6.

The stock-information storing unit 71 stores the commodity information and the commodity identification information in correlation with each other. The stock-information storing unit 71 stores the SKU code, the individual article code, the stock flag, and a store location in correlation with one another. The store location is identification information, such as a store name, of each of the related stores including the first and second stores that handle the commodities identified by the respective individual article codes.

In the stock management system according to the present embodiment, the POS terminal 100 inquires of the store stock unit 61 and the stock-information storing unit 71 about the individual article code (the commodity identification information) acquired by reading the commodity RFID tag and obtains a SKU number or the like for the commodity attached to the RFID tag having the individual article code. Once the SKU is obtained, the POS terminal 100 can obtain a price of the commodity corresponding to the SKU by referring to the price information storage unit 62.

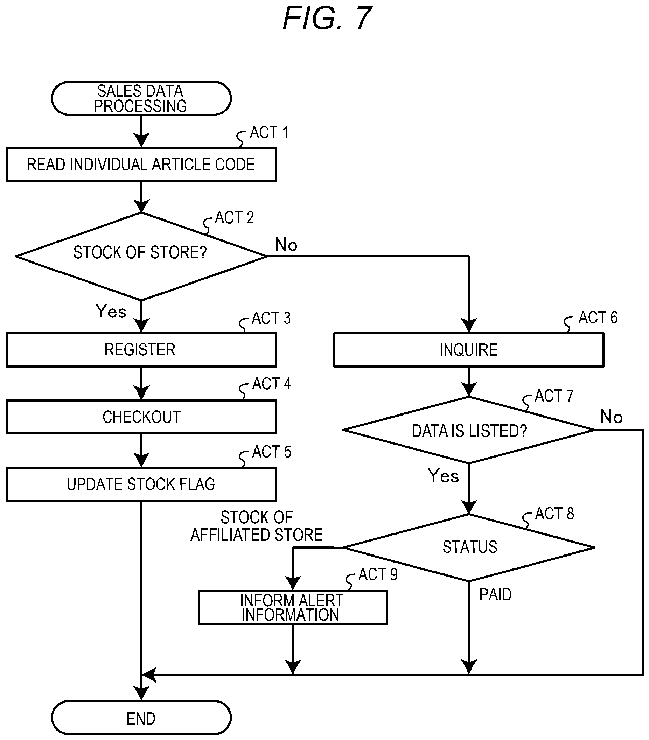

FIG. 7 is a flowchart illustrating an example of a flow of sales data processing executed by the control unit 20 of the POS terminal 100. The control unit 20 can function as a code acquiring unit 21 to acquire an individual article code that has been read by the RFID reader 300 (Act 1). The control unit 20 functions as the inquiring unit 22 and inquires of the store stock unit 61 using the individual article code acquired in Act 1. The control unit 20 functions as the determining unit 23 and determines, based on a result of the inquiry, whether the commodity having the acquired individual article code is listed as in stock at the store (Act 2). In Act 2, for example, the control unit 20 determines whether the acquired individual article code is listed in the stock storing unit 61 and whether the stock flag indicates "1" for that individual article code.

If it is determined that the identified commodity is in stock at the store (Yes in Act 2), the control unit 20 functions as the registering unit 24 and registers, as sales data, the commodity information including the individual article code, a SKU code, a price, a commodity name, and the like of the identified item (Act 3). The control unit 20 functions as a checkout unit and performs checkout processing based on the registered sales data (ACT 4). The checkout processing includes, for example, a payment process of the commodity through provision of price information, processing of a card, receiving of cash, and the like with a customer who purchases the commodity. The control unit 20 functions as the updating unit 26 and sends a request to the store server 600 and the headquarters 700 to update the stock flag correlated with the individual article code of the commodity relating to the registered sales data in both the own-store-stock storing unit 61 and the stock-information storing unit 71 from "1" to "0" (Act 5) to indicate that the identified commodity is no longer in stock at the first store.

If the identified commodity/item is not listed as in stock at the store (No in Act 2), the control unit 20 functions as the inquiring unit 22 and inquires of the stock-information storing unit 71 based on the individual article code (Act 6). Subsequently, the control unit 20 functions as the determining unit 23 and determines, based on a result of the inquiry, whether data associated with the individual article code is listed in the stock-information storing unit 71 (Act 7).

If the data of the identified commodity cannot be found in the stock-information storing unit 71 (No in Act 7), the control unit 20 determines that the individual article code in question is not related to any of the commodities handled at any of the relevant affiliated stores and ends the sales data processing.

If the data associated with the individual article code is listed in the stock-information storing unit 71 (Yes in Act 7), the control unit 20 functions as the determining unit 23 and determines a status of the identified commodity (Act 8) . For example, in Act 8, the control unit 20 determines whether the identified commodity is listed as in stock (the stock flag indicating "1") or has already been sold (the stock flag indicating "0") at an affiliated store (a second store).

If the identified commodity has already paid for at the second store (No in Act 8), the control unit 20 ends the sales data processing. If the identified commodity is listed as still in stock at the second store (Yes in Act 8), the control unit 20 functions as the informing unit 27, generates alert information (Act 9), and ends the sales data processing.

With the sales data processing according to the present embodiment, during the commodity registration using the information stored in an RFID tag, it is possible to exclude information acquired from RFID tags other than those on items listed as being in stock at the store. This can effectively prevent occurrence of an inconvenience, such as erroneous registration of an unintended commodity that should properly be excluded from the registration process. Such unintended items include an item not sold by the store or any of its affiliated stores or an item already purchased from the store or an affiliated store. Thus, commodity registration processing can be performed based on information from RFID tags attached to items that should be paid for in the present transaction.

With the processing explained above, it is also possible to detect when a commodity still listed as being in stock at an affiliated store (and thus not previously purchased from the affiliated store) is present.

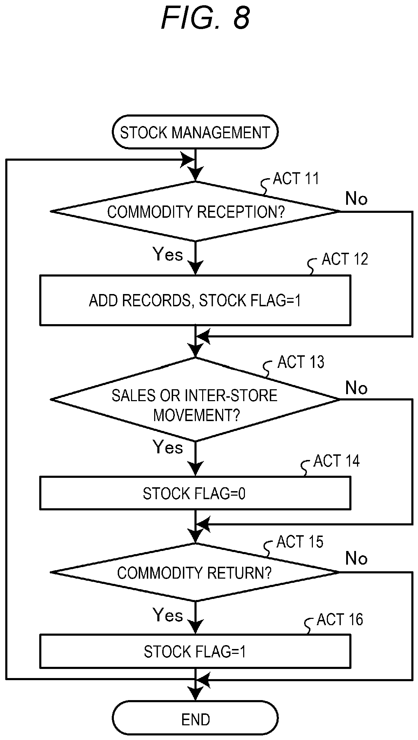

FIG. 8 is a flowchart illustrating an example of a flow of stock management executed by the headquarters server 700 and the store server 600. The CPUs of the headquarters server 700 and the store server 600 execute the programs to realize control units that perform the stock management processing including a process of causing the stock-information storing unit 71 and the store stock unit 61 to timely reflect changes with respect to commodities in stock.

First, if a commodity is received at a store (Yes in Act 11), the control units of the headquarters server 700 and the store server 600 add records to the stock-information storing unit 71 and the store stock unit 61, respectively, and set the stock flags of the received commodity to "1" (Act 12).

If there is no commodity reception at a store (No in Act 11), the processing skips Act 12 and begins ACT 13. If there is sales of a commodity (such as the one updated in response to an update request from the updating unit 26 of the POS terminal 100) or inter-store movement of a commodity (Yes in Act 13), the control units update the stock flags correlated with relevant individual article code in the stock-information storing unit 71 and the store stock unit 61 from "1" to "0" (Act 14).

If there is no sales or inter-store movement (No in Act 13) or there is commodity return (Yes in Act 15), the control units update the stock flags correlated with the relevant individual article code in the stock-information storing unit 71 and the store stock unit 61 from "0" to "1" (Act 16). If there has been no item/commodity return (No in Act 15), the control units of the headquarters server 700 and the store server 600 end the stock management processing.

With the stock management processing according to the present embodiment, it is possible to timely reflect changes to in stock items across related stores, such as those belonging to the same group or chain.

Referring back to FIG. 1, the stock management system of the present embodiment also includes the gate RFID reader 400, which is one example of a security device that performs security processing. The gate RFID reader 400 is installed at an exit, a boundary, or the like of a store. The gate RFID reader 400 communicates with an RFID tag through transmission and reception of radio waves by the gate antenna 410 and acquires information stored in the RFID tag attached to a commodity which, for example, passes through or is being carried by a customer through a gate at an exit, a boundary, or the like of a store. The gate antenna 410 is connected to the gate RFID reader 400 and transmits and receives radio waves according to the control by the gate RFID reader 400.

The gate RFID reader 400 is connected to the store server 600 and sends and receives information to and from the store server 600 as appropriate. The gate RFID reader 400 transmits the information acquired from the RFID tag to the store server 600.

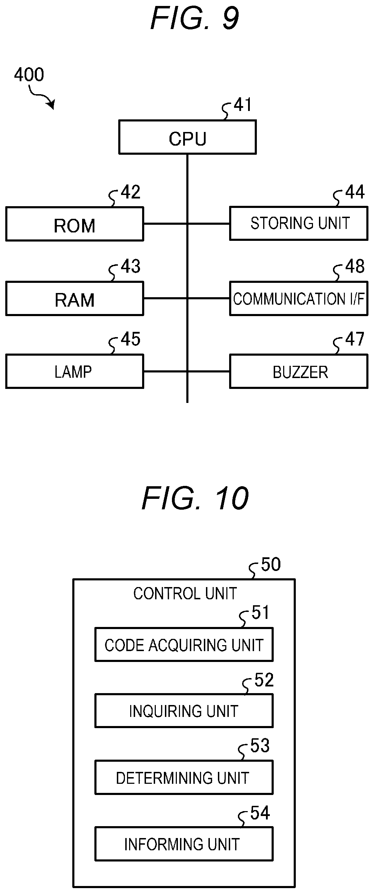

As illustrated in FIG. 9, the gate RFID reader 400 includes a CPU 41, a ROM 42, a RAM 43, a storing unit 44, a lamp 45, a buzzer 47, and a communication I/F 48.

The lamp 45 flashes or shows information to a nearby operator, a user, a customer, or the like according to the control by the CPU 41. The buzzer 47 emits sound, such as an alert sound, according to the control by the CPU 41. The communication I/F 48 is an example of a communication unit that enables communication with an external device, such as the store server 600.

The storing unit 44 stores programs and various files and data. All or part of the programs stored in the storing unit 44 are or is executed by the CPU 41 upon activation and/or during operation of the gate RFID reader 400.

The ROM 42 stores the programs to be executed by the CPU 41. The RAM 43 is used for loading the programs to be executed by the CPU 41 and for temporarily storing various values and data. The CPU 41 executes the programs stored in the ROM 42 and the storing unit 44 to function as a control unit 50

As illustrated in FIG. 10, the control unit 50 that is realized by the CPU 41 upon execution of the programs includes a code acquiring unit 51, an inquiring unit 52, a determining unit 53, and an informing unit 54.

The code acquiring unit 51 acquires the commodity identification information or the individual article code stored in an RFID tag attached to a commodity that enters in a tag read range of the gate RFID reader 400 installed at an exit, a boundary, or the like of a store.

The inquiring unit 52 inquires of the stock-information storing unit 71 of the headquarters server 700 about the identified commodity or the commodity in question using the acquired individual article code.

The determining unit 53 determines, based on a result of the inquiry, whether the identified commodity is listed as in stock at the store or at another store (a second store).

If the determining unit 53 determines that the identified commodity is listed as in stock at the present store, the informing unit 54 generates the alert information. This commodity can be regarded as an unpaid commodity since the inquiry result indicates that the same item is still listed as in stock and thus has not been purchased yet.

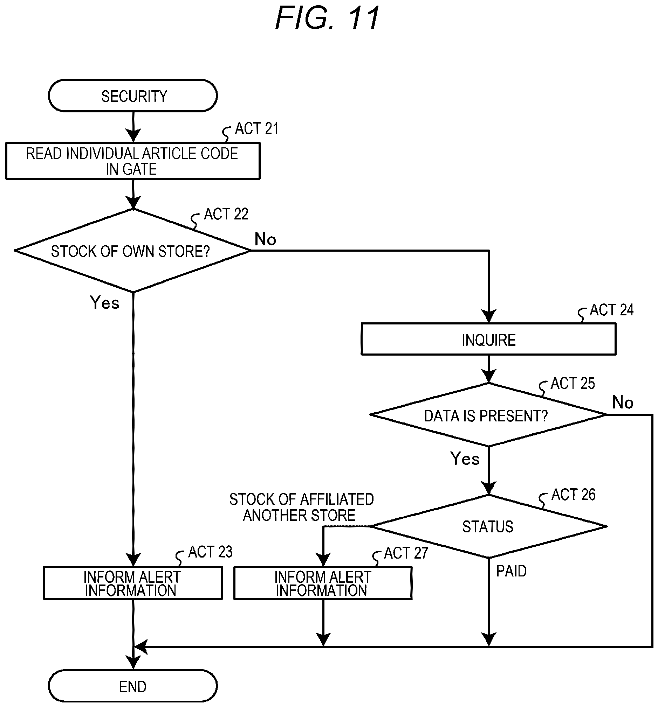

According to the present embodiment, the control unit 50 performs the security processing following the flowchart illustrated as one example in FIG. 11. The control unit 50 functioning as the code acquiring unit 51 acquires an individual article code read by the gate antenna 410 (Act 21). The control unit 50 functions as the inquiring unit 52 and inquires of the store stock unit 61 about the individual article code acquired in Act 21. The control unit 50 functions as the determining unit 53 and determines, based on a result of the inquiry, whether the commodity identified by the individual article code is presently stocked in the store (Act 22). For example, in Act 22, the control unit 50 determines whether the acquired individual article code is listed in the store stock unit 61 and whether the stock flag for the individual article code is "1".

If it is determined that the identified commodity is listed as in stock at the store (Yes in Act 22), the control unit 20 functions as the informing unit 54, generates alert information (Act 23), and ends the security processing.

If it is determined that the identified commodity is not listed as in stock at the store (No in Act 22), the control unit 50 functions as the inquiring unit 52 and inquires of the stock-information storing unit 71 about the acquired individual article code (Act 24). Subsequently, the control unit 20 functions as the determining unit 53 and determines, based on a result of the inquiry in Act 24, whether data of the identified commodity (the item having the individual article code acquired in Act 21) is listed in the stock-information storing unit 71 (Act 25).

If the data for the identified commodity cannot be found in the stock-information storing unit 71 (No in Act 25), the control unit 20 determines that the individual article code in question is not related to any of the commodities handled at any of the affiliated related stores of, for example, the same group or chain and ends the security processing.

If the data of the identified commodity (the item having the individual article code acquired in Act 21) is listed in the stock-information storing unit 71 (Yes in Act 25), the control unit 50 functions as the determining unit 53 and determines a status of the identified commodity (Act 26). For example, in Act 26, the control unit 50 determines whether the identified commodity is in stock (the stock flag indicating "1") or has been paid for (the stock flag indicating "0") at another store (the second store).

If the identified commodity had been paid for at the second store (No in Act 26), the control unit 50 ends the security processing. If the identified commodity is still in stock at the second store (Yes in Act 26), the control unit 50 functions as the informing unit 54, generates the alert information regarding that specific commodity which is now recognized as having been taken away from the second store without payment (Act 27), and ends the security processing.

With the security processing according to the present embodiment, during detection of customer's carrying away an unpaid commodity, it is possible to accurately recognize and prevent false detection of a commodity which should not trigger, for example, an alert or alarm at an exit gate of a store. Such a commodity includes a commodity that is not being handled and sold at the stores of the same group or chain, a commodity that had already been paid for at another store a customer previously visited, or the like.

The security processing according to the present embodiment also makes it possible to determine that payment of a commodity identified as being still in stock at another store of the same group or chain has not been processed yet.

In the stock management system according to the present embodiment, in one instance, taking into consideration speed and load of information transmission and reception via the network 800, the inquiring unit 22 of the POS terminal 100 inquires of the stock-information storing unit 71 of the headquarters server 700 about the commodity identification information (such as the individual article code) only if that specific identification information is absent in the store stock unit 61 of the store server 600. In another instance, the inquiring unit 22 of the POS terminal 100 may not need to inquire of the store stock unit 61 of the store server 600 and may only inquire of the stock-information storing unit 71 of the headquarters server 700 about all commodity identification information.

The programs executed by the sales data processing device (the POS terminal 100) and the security device (the gate RFID reader 400) in the present embodiment are provided by being incorporated in the ROMs or the like in advance.

The programs executed by the sales data processing device and the security device in the present embodiment may be provided by being recorded in computer-readable recording media, such as a CD-ROM, a flexible disk (FD), a CD-R, and a Digital Versatile Disk (DVD), as files of an installable format or an executable format.

The programs executed by the sales data processing device and the security device in the present embodiment may be provided by being stored on a computer connected to a network, such as the Internet, and downloaded through the network. The programs executed by the sales data processing device and the security device in the present embodiment may be provided or distributed through the network, such as the Internet.

The programs executed by the sales data processing device in the present embodiment have a module configuration including the code acquiring unit 21, the inquiring unit 22, the determining unit 23, the registering unit 24, the checkout unit 25, the updating unit 26, and the informing unit 27. The CPU (the processor) reads out the programs from the storage medium and executes them to load the units onto a main storage device. Consequently, the code acquiring unit 21, the inquiring unit 22, the determining unit 23, the registering unit 24, the checkout unit 25, the updating unit 26, and the informing unit 27 are generated on the main storage device.

The programs executed by the security device in the present embodiment have a module configuration including the code acquiring unit 51, the inquiring unit 52, the determining unit 53, and the informing unit 54. The CPU (the processor) reads out the programs from the storage medium and executes them to load the units onto the main storage device. Consequently, the code acquiring unit 51, the inquiring unit 52, the determining unit 53, and the informing unit 54 are generated on the main storage device.

## Claims

1. A point-of-sales data processing device (100), comprising:
a controller (20) configured to:
acquire (Act 1) individual article identification information read by a tag reader (300) from a wireless tag of individual articles;
interrogate a first server (700) for information regarding the acquired individual article identification information, the first server (700) storing the individual article identification information of individual articles handled at a first store at which the point-of-sales data processing device (100) is located and at a second store, in association with stock information of the individual articles;
determine (Act 2), based on the information returned from the first server (700) as a result of the interrogation, whether the article corresponding to the individual article identification information read from the wireless tag by the tag reader (300) of the point-of-sales processing device (100) located at the first store is listed as being is in stock at the first store;
register (Act 3) the individual article identification information in a sales transaction at the first store if the article corresponding to the individual article identification information is listed as being in stock at the first store; and
update (Act 5) the information in the first server (700) for the article corresponding to the individual article identification information to indicate that the article corresponding to the individual article identification information is no longer in stock at the first store if the individual article identification information for the article is registered in the sales transaction;
wherein the controller (20) is further configured to:
if the article corresponding to the individual article identification information is not listed as being in stock at the first store, determine (Act 2), based on the information returned from the first server (700) as a result of the interrogation, whether the article corresponding to the individual article identification information read from the wireless tag by the tag reader (300) is listed as being in stock at the second store, and
if the article corresponding to the individual article identification information is not listed as being in stock at the second store, end the data processing of the article corresponding to the individual article identification information,
wherein the controller (20) is further configured to generate (Act 9) alert information if the article corresponding to the individual article identification information is listed as being in stock at the second store.

2. The point-of-sales data processing device (100) according to claim 1, wherein the controller (20) is further configured to:
interrogate a second server before the first server (700) regarding the article identification information read from the wireless tag to determine whether the article is a commodity type sold at the first store.

3. The point-of-sales data processing device (100) according to any of claims 1 to 2, wherein the wireless tag is an RFID tag.

4. The point-of-sales data processing device (100) according to any of claims 1 to 3, further comprising the tag reader (300).

5. The point-of-sales data processing device (100) according to any of claims 1 to 4, wherein the information concerning individual articles includes a flag data associated therewith indicating whether the article has been previously purchased.

6. A security device, comprising a controller (20) configured to:
acquire (Act 1) individual article identification information read by a tag reader (300) from a wireless tag of individual articles;
interrogate a first server (700) for information regarding the acquired individual article identification information, the first server (700) storing the individual article identification information of individual articles handled at a first store at which the security device is located and at a second store, in association with stock information of the individual articles;
determine (Act 2), based on the information returned from the first server (700) as a result of the interrogation, whether the article corresponding to the individual article identification information read from the wireless tag by the tag reader is listed as being is in stock at the first store; and
generate alert information if the article corresponding to the individual article identification information is listed as being in stock at the first store;
wherein the controller (20) is further configured to:
if the article corresponding to the individual article identification information is not listed as being in stock at the first store, determine, based on the information returned from the first server (700) as a result of the interrogation, whether the article corresponding to the article identification information read from the wireless tag by the tag reader (300) is listed as being in stock at the second store, and
if the article corresponding to the individual article identification information is not listed as being in stock at the second store, end the data processing of the article corresponding to the individual article identification information;
wherein the controller (20) is further configured to generate (Act 9) alert information if the article corresponding to the individual article identification information is listed as being in stock at the second store.

7. The security device according to claim 6, wherein the wireless tag is an RFID tag.

8. The security device according to any of claims 6 to 7, wherein commodity information and commodity identification information are stored in correlation with each other.

9. The security device according to any of claims 6 to 8, further comprising:
the tag reader (300), wherein
the tag reader (300) is a gate tag reader configured to be positioned near an exit of the first store.

10. A non-transitory computer-readable medium storing a program which, when executed, causes a data processing point-of-sales device (100) to perform a sales data processing method comprising:
acquiring (Act 1) individual article identification information read by a tag reader (300) from a wireless tag of individual articles;
interrogating a first server (700) for information regarding the acquired individual article identification information, the first server (700) storing the individual article identification information of individual articles handled at a first store at which the tag reader is located and at a second store, in association with stock information of the individual articles;
determining (Act 2), based on the information returned from the first server (700) as a result of the interrogation, whether the article corresponding to the individual article identification information read from the wireless tag by the tag reader of the point-of-sales processing device (100) located at the first store is listed as being in stock at the first store;
registering (Act 3) the individual article identification information in a sales transaction if the article corresponding to the individual article identification information is listed as being in stock at the first store; and
updating (Act 5) the information in the first server (700) for the article corresponding to the individual article identification information to indicate that the article corresponding to the individual article identification information is no longer in stock at the first store if the individual article identification information for the article is registered in the sales transaction;
wherein:
if the article corresponding to the individual article identification information is not listed as being in stock at the first store, determining, based on the information returned from the first server (700) as a result of the interrogation, whether the article corresponding to the individual article identification information read from the wireless tag by the tag reader (300) is listed as being in stock at the second store, and
if the article corresponding to the individual article identification information is not listed as being in stock at the second store, determining end the data processing of the article corresponding to the individual article identification information; and
generating (Act 9) alert information if the article corresponding to the individual article identification information is listed as being in stock at the second store.

11. The non-transitory computer-readable medium according to claim 10, the method further comprising:
performing checkout processing for the sales transaction based on the registered article identification information.

## Patentansprüche

1. Verkaufsstellen-Datenverarbeitungsvorrichtung (100), umfassend:
eine Steuereinheit (20), die zu Folgendem konfiguriert ist:
Erfassen (Handlung 1) von individuellen Artikelidentifizierungsinformationen, die durch ein Etikettenlesegerät (300) von einem drahtlosen Etikett individueller Artikel gelesen wurden;
Abfragen eines ersten Servers (700) nach Informationen bezüglich der erfassten individuellen Artikelidentifizierungsinformationen, wobei der erste Server (700) die individuellen Artikelidentifizierungsinformationen individueller Artikel, die in einem ersten Geschäft, in dem sich die Verkaufsstellen-Datenverarbeitungsvorrichtung (100) befindet, und in einem zweiten Geschäft gehandhabt werden, in Zuordnung zu Vorratsinformationen der individuellen Artikel speichert;
Bestimmen (Handlung 2), ob der Artikel, der den individuellen Artikelidentifizierungsinformationen entspricht, die durch das Etikettenlesegerät (300) der Verkaufsstellen-Verarbeitungsvorrichtung (100), die sich in dem ersten Geschäft befindet, von dem drahtlosen Etikett gelesen wurden, als in dem ersten Geschäft vorrätig aufgeführt ist, basierend auf den von dem ersten Server (700) als ein Ergebnis der Abfrage zurückgegebenen Informationen;
Registrieren (Handlung 3) der individuellen Artikelidentifizierungsinformationen in einer Verkaufstransaktion in dem ersten Geschäft, falls der Artikel, der den individuellen Artikelidentifizierungsinformationen entspricht, als in dem ersten Geschäft vorrätig aufgeführt ist; und
Aktualisieren (Handlung 5) der Informationen in dem ersten Server (700) für den Artikel, der den individuellen Artikelidentifizierungsinformationen entspricht, um anzugeben, dass der Artikel, der den individuellen Artikelidentifizierungsinformationen entspricht, in dem ersten Geschäft nicht länger vorrätig ist, falls die individuellen Artikelidentifizierungsinformationen für den Artikel in der Verkaufstransaktion registriert sind;
wobei die Steuereinheit (20) weiter zu Folgendem konfiguriert ist:
Bestimmen (Handlung 2), ob der Artikel, der den individuellen Artikelidentifizierungsinformationen entspricht, die durch das Etikettenlesegerät (300) von dem drahtlosen Etikett gelesen wurden, als in dem zweiten Geschäft vorrätig aufgeführt ist, basierend auf den von dem ersten Server (700) als ein Ergebnis der Abfrage zurückgegebenen Informationen, falls der Artikel, der den individuellen Artikelidentifizierungsinformationen entspricht, nicht als in dem ersten Geschäft vorrätig aufgeführt ist, und
Beenden der Datenverarbeitung des Artikels, der den individuellen Artikelidentifizierungsinformationen entspricht, falls der Artikel, der den individuellen Artikelidentifizierungsinformationen entspricht, nicht als in dem zweiten Geschäft vorrätig aufgeführt ist,
wobei die Steuereinheit (20) weiter dazu konfiguriert ist, Warninformationen zu erzeugen (Handlung 9), falls der Artikel, der den individuellen Artikelidentifizierungsinformationen entspricht, als in dem zweiten Geschäft vorrätig aufgeführt ist.

2. Verkaufsstellen-Datenverarbeitungsvorrichtung (100) nach Anspruch 1, wobei die Steuereinheit (20) weiter zu Folgendem konfiguriert ist:
Abfragen eines zweiten Servers vor dem ersten Server (700) bezüglich der von dem drahtlosen Etikett gelesenen Artikelidentifizierungsinformationen, um zu bestimmen, ob es sich bei dem Artikel um eine in dem ersten Geschäft verkaufte Warenart handelt.

3. Verkaufsstellen-Datenverarbeitungsvorrichtung (100) nach einem der Ansprüche 1 bis 2, wobei das drahtlose Etikett ein RFID-Etikett ist.

4. Verkaufsstellen-Datenverarbeitungsvorrichtung (100) nach einem der Ansprüche 1 bis 3, weiter umfassend das Etikettenlesegerät (300).

5. Verkaufsstellen-Datenverarbeitungsvorrichtung (100) nach einem der Ansprüche 1 bis 4, wobei die Informationen bezüglich der einzelnen Artikel Flaggendaten einschließen, die diesen zugeordnet sind, die angeben, ob der Artikel bereits zuvor gekauft wurde.

6. Sicherheitsvorrichtung, die eine Steuereinheit (20) umfasst, die zu Folgendem konfiguriert ist:
Erfassen (Handlung 1) von individuellen Artikelidentifizierungsinformationen, die durch ein Etikettenlesegerät (300) von einem drahtlosen Etikett individueller Artikel gelesen wurden;
Abfragen eines ersten Servers (700) nach Informationen bezüglich der erfassten individuellen Artikelidentifizierungsinformationen, wobei der erste Server (700) die individuellen Artikelidentifizierungsinformationen individueller Artikel, die in einem ersten Geschäft, in dem sich die Sicherheitsvorrichtung befindet, und in einem zweiten Geschäft gehandhabt werden, in Zuordnung zu Vorratsinformationen der individuellen Artikel speichert;
Bestimmen (Handlung 2), ob der Artikel, der den individuellen Artikelidentifizierungsinformationen entspricht, die durch das Etikettenlesegerät von dem drahtlosen Etikett gelesen wurden, als in dem ersten Geschäft vorrätig aufgeführt ist, basierend auf den von dem ersten Server (700) als ein Ergebnis der Abfrage zurückgegebenen Informationen; und
Erzeugen von Warninformationen, falls der Artikel, der den individuellen Artikelidentifizierungsinformationen entspricht, als in dem ersten Geschäft vorrätig aufgeführt ist;
wobei die Steuereinheit (20) weiter zu Folgendem konfiguriert ist:
Bestimmen, ob der Artikel, der den Artikelidentifizierungsinformationen entspricht, die durch das Etikettenlesegerät (300) von dem drahtlosen Etikett gelesen wurden, als in dem zweiten Geschäft vorrätig aufgeführt ist, falls der Artikel, der den individuellen Artikelidentifizierungsinformationen entspricht, nicht als in dem ersten Geschäft vorrätig aufgeführt ist, basierend auf den durch den ersten Server (700) als ein Ergebnis der Abfrage zurückgegebenen Informationen und
Beenden der Datenverarbeitung des Artikels, der den individuellen Artikelidentifizierungsinformationen entspricht, falls der Artikel, der den individuellen Artikelidentifizierungsinformationen entspricht, nicht als in dem zweiten Geschäft vorrätig aufgeführt ist;
wobei die Steuereinheit (20) weiter dazu konfiguriert ist, Warninformationen zu erzeugen (Handlung 9), falls der Artikel, der den individuellen Artikelidentifizierungsinformationen entspricht, als in dem zweiten Geschäft vorrätig aufgeführt ist.

7. Sicherheitsvorrichtung nach Anspruch 6, wobei das drahtlose Etikett ein RFID-Etikett ist.

8. Sicherheitsvorrichtung nach einem der Ansprüche 6 bis 7, wobei Wareninformationen und Warenidentifizierungsinformationen in Korrelation zueinander gespeichert sind.

9. Sicherheitsvorrichtung nach einem der Ansprüche 6 bis 8, weiter umfassend:
das Etikettenlesegerät (300), wobei
das Etikettenlesegerät (300) ein Toretikettenlesegerät ist, das dazu konfiguriert ist, in der Nähe eines Ausgangs des ersten Geschäfts positioniert zu sein.

10. Nichttransitorisches computerlesbares Medium, auf dem ein Programm gespeichert ist, das bei Ausführung eine datenverarbeitende Verkaufsstellenvorrichtung (100) dazu veranlasst, ein Verkaufsdatenverarbeitungsverfahren durchzuführen, das Folgendes umfasst:
Erfassen (Handlung 1) von individuellen Artikelidentifizierungsinformationen, die durch ein Etikettenlesegerät (300) von einem drahtlosen Etikett einzelner Artikel gelesen wurden;
Abfragen eines ersten Servers (700) nach Informationen bezüglich der erfassten individuellen Artikelidentifizierungsinformationen, wobei der erste Server (700) die individuellen Artikelidentifizierungsinformationen individueller Artikel, die in einem ersten Geschäft, in dem sich das Etikettenlesegerät befindet, und in einem zweiten Geschäft gehandhabt werden, in Zuordnung zu Vorratsinformationen der individuellen Artikel speichert;
Bestimmen (Handlung 2), ob der Artikel, der den individuellen Artikelidentifizierungsinformationen entspricht, die durch das Etikettenlesegerät der Verkaufsstellen-Verarbeitungsvorrichtung (100), die sich in dem ersten Geschäft befindet, von dem drahtlosen Etikett gelesen wurden, als in dem ersten Geschäft vorrätig aufgeführt ist, basierend auf den von dem ersten Server (700) als ein Ergebnis der Abfrage zurückgegebenen Informationen;
Registrieren (Handlung 3) der individuellen Artikelidentifizierungsinformationen in einer Verkaufstransaktion, falls der Artikel, der den individuellen Artikelidentifizierungsinformationen entspricht, als in dem ersten Geschäft vorrätig aufgeführt ist; und
Aktualisieren (Handlung 5) der Informationen in dem ersten Server (700) für den Artikel, der den individuellen Artikelidentifizierungsinformationen entspricht, um anzugeben, dass der Artikel, der den individuellen Artikelidentifizierungsinformationen entspricht, in dem ersten Geschäft nicht länger vorrätig ist, falls die individuellen Artikelidentifizierungsinformationen für den Artikel in der Verkaufstransaktion registriert sind;
wobei:
Bestimmen, ob der Artikel, der den individuellen Artikelidentifizierungsinformationen entspricht, die durch das Etikettenlesegerät (300) von dem drahtlosen Etikett gelesen wurden, als in dem zweiten Geschäft vorrätig aufgeführt ist, basierend auf den von dem ersten Server (700) als ein Ergebnis der Abfrage zurückgegebenen Informationen, falls der Artikel, der den individuellen Artikelidentifizierungsinformationen entspricht, nicht als in dem ersten Geschäft vorrätig aufgeführt ist, und
Bestimmen, die Datenverarbeitung des Artikels, der den individuellen Artikelidentifizierungsinformationen entspricht, zu beenden, falls der Artikel, der den individuellen Artikelidentifizierungsinformationen entspricht, nicht als in dem zweiten Geschäft vorrätig aufgeführt ist; und
Erzeugen (Handlung 9) von Warninformationen, falls der Artikel, der den individuellen Artikelidentifizierungsinformationen entspricht, als in dem zweiten Geschäft vorrätig aufgeführt ist.

11. Nichttransitorisches computerlesbares Medium nach Anspruch 10, wobei das Verfahren weiter Folgendes umfasst:
Durchführen einer Kassierverarbeitung für die Verkaufstransaktion basierend auf den registrierten Artikelidentifizierungsinformationen.

## Revendications

1. Dispositif (100) de traitement de données de point de vente, comprenant :
un dispositif de commande (20) configuré pour :
acquérir (Acte 1) des informations d'identification d'article individuel lues par un lecteur (300) d'étiquette depuis une étiquette sans fil d'articles individuels ;
interroger un premier serveur (700) pour des informations concernant les informations d'identification d'article individuel acquises, le premier serveur (700) stockant les informations d'identification d'article individuel d'articles individuels manipulés au niveau d'un premier magasin au niveau duquel est situé le dispositif (100) de traitement de données de point de vente et au niveau d'un deuxième magasin, en association avec des informations de stock des articles individuels ;
déterminer (Acte 2), sur la base des informations renvoyées depuis le premier serveur (700) à la suite de l'interrogation, si l'article correspondant aux informations d'identification d'article individuel lues depuis l'étiquette sans fil par le lecteur (300) d'étiquette du dispositif (100) de traitement de données de point de vente situé au niveau du premier magasin est listé comme étant en stock dans le premier magasin ;
enregistrer (Acte 3) les informations d'identification d'article individuel dans une transaction de vente au niveau du premier magasin si l'article correspondant aux informations d'identification d'article individuel est listé comme étant en stock dans le premier magasin ; et
mettre à jour (Acte 5) les informations dans le premier serveur (700) pour l'article correspondant aux informations d'identification d'article individuel afin d'indiquer que l'article correspondant aux informations d'identification d'article individuel n'est plus en stock dans le premier magasin si les informations d'identification d'article individuel pour l'article sont enregistrées dans la transaction de vente ;
dans lequel le dispositif de commande (20) est en outre configuré pour :
si l'article correspondant aux informations d'identification d'article individuel n'est pas listé comme étant en stock dans le premier magasin, déterminer (Acte 2), sur la base des informations renvoyées depuis le premier serveur (700) à la suite de l'interrogation, si l'article correspondant aux informations d'identification d'article individuel lues depuis l'étiquette sans fil par le lecteur (300) d'étiquette est listé comme étant en stock dans le deuxième magasin, et
si l'article correspondant aux informations d'identification d'article individuel n'est pas listé comme étant en stock dans le deuxième magasin, mettre fin au traitement de données de l'article correspondant aux informations d'identification d'article individuel,
dans lequel le dispositif de commande (20) est en outre configuré pour générer (Acte 9) des informations d'alerte si l'article correspondant aux informations d'identification d'article individuel est listé comme étant en stock dans le deuxième magasin.

2. Dispositif (100) de traitement de données de point de vente selon la revendication 1, dans lequel le dispositif de commande (20) est en outre configuré pour :
interroger un deuxième serveur avant le premier serveur (700) concernant les informations d'identification d'article lues depuis l'étiquette sans fil pour déterminer si l'article est un type de produit vendu dans le premier magasin.

3. Dispositif (100) de traitement de données de point de vente selon l'une quelconque des revendications 1 à 2, dans lequel l'étiquette sans fil est une étiquette RFID.

4. Dispositif (100) de traitement de données de point de vente selon l'une quelconque des revendications 1 à 3, comprenant en outre le lecteur (300) d'étiquette.

5. Dispositif (100) de traitement de données de point de vente selon l'une quelconque des revendications 1 à 4, dans lequel les informations concernant des articles individuels incluent une donnée d'indication associée à ceux-ci indiquant si l'article a été préalablement acheté.

6. Dispositif de sécurité, comprenant un dispositif de commande (20) configuré pour :
acquérir (Acte 1) des informations d'identification d'article individuel lues par un lecteur (300) d'étiquette depuis une étiquette sans fil d'articles individuels ;
interroger un premier serveur (700) pour des informations concernant les informations d'identification d'article individuel acquises, le premier serveur (700) stockant les informations d'identification d'article individuel d'articles individuels manipulés au niveau d'un premier magasin au niveau duquel est situé le dispositif de sécurité et au niveau d'un deuxième magasin, en association avec des informations de stock des articles individuels ;
déterminer (Acte 2), sur la base des informations renvoyées depuis le premier serveur (700) à la suite de l'interrogation, si l'article correspondant aux informations d'identification d'article individuel lues depuis l'étiquette sans fil par le lecteur est listé comme étant en stock dans le premier magasin ; et
générer des informations d'alerte si l'article correspondant aux informations d'identification d'article individuel est listé comme étant en stock dans le premier magasin ;
dans lequel le dispositif de commande (20) est en outre configuré pour :
si l'article correspondant aux informations d'identification d'article individuel n'est pas listé comme étant en stock dans le premier magasin, déterminer, sur la base des informations renvoyées depuis le premier serveur (700) à la suite de l'interrogation, si l'article correspondant aux informations d'identification d'article lues depuis l'étiquette sans fil par le lecteur (300) d'étiquette est listé comme étant en stock dans le deuxième magasin, et
si l'article correspondant aux informations d'identification d'article individuel n'est pas listé comme étant en stock dans le deuxième magasin, mettre fin au traitement de données de l'article correspondant aux informations d'identification d'article individuel ;
dans lequel le dispositif de commande (20) est en outre configuré pour générer (Acte 9) des informations d'alerte si l'article correspondant aux informations d'identification d'article individuel est listé comme étant en stock dans le deuxième magasin.

7. Dispositif de sécurité selon la revendication 6, dans lequel l'étiquette sans fil est une étiquette RFID.

8. Dispositif de sécurité selon l'une quelconque des revendications 6 à 7, dans lequel des informations de produit et des informations d'identification de produit sont stockées en corrélation les unes avec les autres.

9. Dispositif de sécurité selon l'une quelconque des revendications 6 à 8, comprenant en outre :
le lecteur (300) d'étiquette, dans lequel
le lecteur (300) d'étiquette est un lecteur d'étiquette de porte configuré pour être positionné près d'une sortie du premier magasin.

10. Support non transitoire lisible par ordinateur stockant un programme qui, lorsqu'il est mis en œuvre, amène un dispositif (100) de traitement de données de point de vente à mettre en œuvre un procédé de traitement de données de vente comprenant :
l'acquisition (Acte 1) d'informations d'identification d'article individuel lues par un lecteur (300) d'étiquette depuis une étiquette sans fil d'articles individuels ;
l'interrogation d'un premier serveur (700) pour des informations concernant les informations d'identification d'article individuel acquises, le premier serveur (700) stockant les informations d'identification d'article individuel d'articles individuels manipulés au niveau d'un premier magasin au niveau duquel est situé le lecteur d'étiquette et au niveau d'un deuxième magasin, en association avec des informations de stock des articles individuels ;
le fait de déterminer (Acte 2), sur la base des informations renvoyées depuis le premier serveur (700) à la suite de l'interrogation, si l'article correspondant aux informations d'identification d'article individuel lues depuis l'étiquette sans fil par le lecteur d'étiquette du dispositif (100) de traitement de données de point de vente situé au niveau du premier magasin est listé comme étant en stock dans le premier magasin ;
l'enregistrement (Acte 3) des informations d'identification d'article individuel dans une transaction de vente si l'article correspondant aux informations d'identification d'article individuel est listé comme étant en stock dans le premier magasin ; et
la mise à jour (Acte 5) des informations dans le premier serveur (700) pour l'article correspondant aux informations d'identification d'article individuel afin d'indiquer que l'article correspondant aux informations d'identification d'article individuel n'est plus en stock dans le premier magasin si les informations d'identification d'article individuel pour l'article sont enregistrées dans la transaction de vente ;
dans lequel :
si l'article correspondant aux informations d'identification d'article individuel n'est pas listé comme étant en stock dans le premier magasin, le fait de déterminer, sur la base des informations renvoyées depuis le premier serveur (700) à la suite de l'interrogation, si l'article correspondant aux informations d'identification d'article individuel lues depuis l'étiquette sans fil par le lecteur (300) d'étiquette est listé comme étant en stock dans le deuxième magasin, et
si l'article correspondant aux informations d'identification d'article individuel n'est pas listé comme étant en stock dans le deuxième magasin, la détermination de la fin du traitement de données de l'article correspondant aux informations d'identification d'article individuel ; et
la génération (Acte 9) d'informations d'alerte si l'article correspondant aux informations d'identification d'article individuel est listé comme étant en stock dans le deuxième magasin.

11. Support non transitoire lisible par ordinateur selon la revendication 10, le procédé comprenant en outre :
la mise en œuvre d'un traitement de vérification pour la transaction de vente sur la base des informations d'identification d'article enregistrées.
